(19) Europäisches Patentamt
European Patent Office
Office européen des brevets

(11) Publication number: 0 241 116 B1

# (12) EUROPEAN PATENT SPECIFICATION

(45) Date of publication of the patent specification: 19.09.90

(51) Int. Cl.[5]: E04B 1/94, E04H 1/12, B61D 17/10

(21) Application number: 87301198.5

(22) Date of filing: 12.02.87

(54) **Floor structure.**

(30) Priority: 13.02.86 JP 29977/86

(43) Date of publication of application: 14.10.87 Bulletin 87/42

(45) Publication of the grant of the patent: 19.09.90 Bulletin 90/38

(84) Designated Contracting States: DE FR GB

(56) References cited:
WO-A-85/04209
CH-A-597 458
DE-A-2 908 823
FR-A-682 875
FR-A-2 547 783

(73) Proprietor: KAWASAKI JUKOGYO KABUSHIKI KAISHA, 1-1 Higashikawasaki-cho 3-chome, Chuo-ku Kobe-shi Hyogo-ken(JP)

(72) Inventor: Fujii, Hideichi, 9-2, Shioyacho 5 chome Tarumi-ku, Kobe-shi Hyogo 655(JP)
Inventor: Nakano, Kiyomori, 179-3, Toba, Akashi-shi Hyogo 673(JP)

(74) Representative: Pearce, Anthony Richmond et al, MARKS & CLERK Alpha Tower Suffolk Street, Queensway Birmingham B1 1TT(GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention concerns a floor structure for use in buildings or in vehicles such as railroad vehicles, buses or ships, or the like, in which equipment is installed below the floor, and special precautions have to be taken to prevent or restrict the spread of fire through the floor.

In conventional floor structures in buildings, while heat resistant materials, for example, plaster board or concrete are usually employed for fire-resistance and heat-resistance in the event of fire, those floor structures which are required to be reduced weight and high strength have often been made of metals. As an example, a metal floor structure is proposed in Japanese Patent Application Laid Open No. Sho 60-234065 in which heat insulating material is attached on both of the upper and the lower surfaces of a metal floor structure and the lower surface is covered with a steel plate.

However, in such a floor structure, although the melt destruction of the floor structure can be prevented even when the temperature rise is abrupt, there is insufficient time for escape of the occupants, particularly, in vehicles. Further, in the case where equipment is suspended below the floor, it is necessary for it to be attached by supports which pass through the metal plate at the lower surface and are secured to the beams of the floor structure. In this case, it is necessary to cut away part of the heat insulating material, or to attach additional beams on the underside of the metal plate, which leads to problems in view of the amount of installation work and the resultant structure.

Additionally, if a floor structure cannot satisfy the ASTM E-119 fire-resistance standard in the United States, it cannot be used in vehicles in the United States or in other countries applying this standard. It is accordingly necessary to provide a floor structure which is capable of satisfying such a standard and also of overcoming the above problem.

In the United States, a fire-resistance test is specified in ASTM E-119 Standard Methods of Fire Tests of Building Construction and Materials. According to this standard, the allowable limit for the temperature rise in the structure and the material is defined as lower than 250°F (139°C).

Furthermore, according to the standards for the vehicles in Chapter 4 of American standards NFPA 130 FIXED GUIDEWAY TRANSIT SYSTEM, it is specified that the conditions should at least be according to ASTM E-199.

Thus, the temperature has to be kept below the standard at least for 15 minutes or for a period which allows the passengers to escape, and it will be apparent that the techniques as described above cannot satisfy such a requirement.

CH-A-597458 discloses a floor structure comprising an upper layer structure, a structural concrete middle layer, a lower fire resistant layer, and a heat insulating material between the middle and lower layers.

WO-A-85/04209 discloses a roof structure in which an upper layer structure includes a glass fibre web containing a quantity of crystalline bonded water which vaporises to release steam in the event of fire.

### SUMMARY OF THE INVENTION

It is an object of this invention to provide a floor structure excellent in the fire-resistance and heat-resistance, as well as capable of facilitating the mounting of equipment under the floor.

According to the present invention, there is provided a floor structure comprising an upper layer, a middle layer for providing structural strength, a lower layer covering the lower surface of the middle layer, and a layer of heat insulating material disposed between the lower layer and the middle layer, said middle layer and the lower layer being made of flame-retardant material, characterized in that said upper layer contains a material which is thermally decomposable to release water, and in that said middle layer is provided with a plurality of partitioned spaces and adapted to support a load through the upper layer from below over the entire area thereof.

Further in this invention, the thermally decomposable material may be distributed over all or only a portion of the upper layer so that temperature rise can be suppressed due to the steam released from the thermally decomposable material upon heating. A heat insulating effect can be obtained by the heat insulating material between the middle layer and the lower layer. The lower layer may be adapted to be clamped to a mounting portion forming part of the middle layer or to a connection member attached to the middle layer. Preferably, a T-shaped or other rebated groove is formed in the mounting portion and/or in the connection member and opens onto the outside of the floor structure.

### BRIEF DESCRIPTION OF THE ACCOMPANYING DRAWINGS

An embodiment of the present invention will now be described by way of example, with reference to the accompanying drawings, wherein:

Figure 1 is a schematic view of a floor structure according to one embodiment of this invention;
Figure 2 is a cross-sectional view of one example for a sheet used in the floor structure;

Figure 3 is a cross-sectional view on a larger scale of part of the floor structure of Fig. 1, illustrating the mounting relationship between the floor structure and the lower plate in this invention;

Figure 4 is a cross sectional view for a specimen S of floor structure used for the fire-resistance test;

Figures 5a and 5b are explanatory views illustrating the relationship between the furnace and the specimen S used for the fire-resistance test;

Figure 6 is a graph for the curve illustrating the furnace temperature versus time for the variation of the outside temperature.

Figures 7a, 7b and 7c are explanatory views illustrating the positions at which temperature is measured; and

Figure 8 is a graph of a curve illustrating the floor temperature versus time illustrating the temperature variation in the chamber.

DETAILED DESCRIPTION OF THE INVENTION

Referring now to Fig. 1, the floor structure illustrated therein comprises an upper layer 1 which is at least partly composed of a floor sheet comprising, for example, rubber containing a hydroxide or other material which is thermally decomposable to release water. The upper surface of the layer 1 defines the floor surface in the chamber and, when it is heated from the external fire, the water released by thermal decomposition of the material contained in the layer evaporates as steam so as to absorb heat, thereby to suppress the temperature rise in the floor structure.

The floor structure also comprises a middle layer 2 made of a flame retardant material such as metal for imparting structural strength to the floor structure and serves as a safety structure for preventing combustion and providing safety during escape of passengers/occupants of the chamber above. Further, by providing spaces in the layer 2, cooling and heat insulating effects can be provided. Also, by proper design of metal members constituting the layer 2, high strength combined with low weight can be achieved.

The floor structure further comprises a lower layer 3 which, in the event of a fire below the floor structure, is directly exposed to fire. The lower layer 3 is composed of a flame retardant material. The heat insulating effect can be improved and the main part of the floor structure can be protected against fire by disposing heat insulating material 4 between the lower layer 3 and the middle layer 2. The lower layer 3 is attached directly to the middle layer 2 by mounting portions 5 projecting downwardly from the middle layer 2 and integrally formed with the latter and/or indirectly to the middle layer 2 by means of separate connection members 6. In the drawings, reference numeral 8 represents a wall.

Referring now to Fig. 2, sheet 10 in this example constitutes the upper layer 1 and is made of surface, middle and bottom sub-layers 11, 12 and 13, respectively. Surface sub-layer 11 defines a top surface of layer 1 and is preferably made of rubber or similar material having a high abrasion resistance and a cushioning function. Middle sub-layer 12 is made of a blended rubber material having a low heat conductivity. Bottom sub-layer 13 is made of rubber or similar material containing a hydroxide, (eg a material which contains water of crystallization) so that, upon heating, water evaporates from the structure to produce steam and thereby absorbs heat from the sheet 10 and the middle layer 2 thereby suppressing the overall temperature rise therein.

As the thermally decomposable material, an inorganic material eg a hydroxide such as aluminium hydroxide [$Al(OH)_3$] or magnesium hydroxide [$Mg(OH)_2$] is suitable, or a hydrated salt, eg $CaCl_2.6H_2O$ or $Na_2SO_3.7H_2O$.

The middle sub-layer 12 is preferably made of a material having, for example, a heat conductivity of lower than 0.35 Kcal/m.h.deg. Ingredients usable therefor includes granular cork, wood dust, glass, cermaic microballoons, fiber dust and cotton dust.

The ingredients for the sub-layers of the sheet 10 in the example used for the fire resistance test described later are as below:-

Surface sub-layer 11

| Ingredient | parts by weight |
|---|---|
| SBR #1500 (IISRP Standard) | 70 |
| High Styrene SBR | 30 |
| Hard clay | 150 |
| Light calcium carbonate | 70 |
| Naphthenic oil | 3 |
| Stearic acid | 2 |
| Vulcanization accelerator - dibenzothiozyl disulfide | 2.5 |
| Vulcanization promoter - tetramethylthiuram monosulfide | 0.2 |
| Sulfur | 5 |
| Total | 337.7 |

Middle sub-layer 12

| Ingredient | parts by weight |
|---|---|
| Natural rubber - ribbed smoked sheet No. 4 grade (RSS -4) | 50 |
| Regenerated rubber | 100 |
| Light calcium carbonate | 50 |
| Granular cork | 60 |
| Zinc powder | 5 |
| Stearic acid | 2 |
| Vulcanization accelerator (OBS - N-oxydiethylene-2-benzosulfenamide) | 1.2 |
| Sulfur | 3 |
| Total | 271.2 |

## Bottom sub-layer 13

| Ingredient | parts by weight |
|---|---|
| Natural rubber (RSS -4) | 50 |
| Regenerated rubber | 100 |
| Aluminium hydroxide | 100 |
| Zinc powder | 5 |
| Stearic acid | 2 |
| Vulcanization promotor (NOB) | 1.2 |
| Sulfur | 3 |
| Total | 261.2 |

In the ingredients as described above, the temperature at which the water of crystallization is released is from 150 to 300°C. Further, the thickness and the heat conductivity for each of the sub-layers are as below.

| | | |
|---|---|---|
| Surface sub-layer | 2 mm | 0.410 Kcal/m.h.deg |
| Middle sub-layer | 1.5 mm | 0.210 Kcal/m.h.deg |
| Bottom sub-layer | 1.5 mm | 0.380 Kcal/m.h.deg |

For the upper layer 1, it is sufficient that the layer has properties which are not inferior to those of the example described above, and other layer constitutions may be employed as required.

In the example illustrated in Fig. 3, the middle layer 2 is defined by a structure 21 which is constituted by joining a multiplicity of hollow blocks 22 made of extruded aluminium by welding or the like. Such a hollow structure is of high strength and is also light in weight. Mounting portions 5 are integrally formed with the blocks 22 during extrusion of the latter.

The mounting portions 5 project downwardly from the bottom of the structure 21 and are formed with T-shaped grooves 51 and 52 therein. These grooves 51 and 52 serve to receive the heads of mounting bolts used to suspend equipment below the floor structure. Bottom plate 31 forming the lower layer 3 is disposed between the mounting portions 5 and is attached thereto by clamping means 7 such as bolts or rivets. Since the bottom plate 31 is directly exposed to the fire in the event of a fire occurring in the equipment below the floor or outside the chamber, it is necessary for the material forming the bottom plate 31 to be flame-retardant. Thin stainless steel plates were used in the fire resistant test.

Only the necessary parts of the T-shaped grooves 51 in the mounting portions 5 are directly exposed externally, other parts of the T-shaped grooves 51 and the grooves 52 being protected from exposure. In this embodiment, not all of the grooves 52 are used. However, depending on the type of equipment to be installed below the floor, all are available for use as desired. Where a T-shaped groove 52 is to be used, it is used in conjunction with a connection member 6 which extends as far as the bottom plate 31. In this case, the connection member 6 of the required length is attached to the T-shaped groove 52 by means of bolts and nuts. A T-shaped groove 61 is provided in each connection member 6 and is used for mounting the equipment. Further, apertures are provided in the bottom plate 31 so as to enable access to be gained to the grooves 61, and the lower plate 31 and the connection members 6 are secured together as required. Glass fiber or ceramic fiber is provided as the heat insulating material 4 in the space between the structure 21 and the bottom plate 31. The heat insulating material 4 is a usual commercially available material and known as flame-retardant material.

A fire-resistance test based on the above-mentioned ASTM E-119 was carried out on the above-mentioned example. The outline of the result of the test are described below. Figure 4 shows the specimen S used for the fire-resistance test. Although the specimen S is different in size from that designated by the standards since the size of the actual product (vehicle in this case) is smaller than the specified size, other conditions are identical with those in the standards.

Figure 5a shows the cross section of a furnace 9 used for the fire-resistance test and the setting state of the specimen S, and Figure 5b is a plan view thereof. The specimen S is suspended by hangers 10a secured on fixed members 10 and apply an assumed load of 324 kg/m$^2$ (equipment 145 kg/m$^2$ + passenger 179 kg/m$^2$) over the entire surface of the floor ($l_1$ --- 2.12 m x $l_2$ --- 2.85m). The longitudinal size $l_3$ for the specimen S including the wall 8 is 3.064m, and the distance $l_4$ between the fixed members 10 is 1.50m. The total load is 1958 kg. The entire length of the furnace 9 is 7m and the furnace is heated from both sides thereof by the combustion of gases at burners 11. The value for the temperature variation in the furnace 9 is defined in ASTM E-119, and a 10% variation is allowable relative to the value shown by the solid line in Figure 6. The positions for arranging thermocouples A, B for sampling the temperature are as shown in Figures 7a, 7b and 7c, by which the temperature for the furnace 9 is measured at each of the points from 1A through 6A, while the temperature for the specimen S is measured at each of the points from 1B through 9B disposed at the floor surface by the thermocouples, measurements being taken every minute. Further, cotton pieces are placed at each of the points from 1B to 9B to test whether or not they are ignited under the test conditions.

The thermocouples A are disposed in the furnace 9, for example, at six positions 1A - 6A, whilst the thermocouples B attached to the specimen S are disposed, for example, at 9 positions 1B- 9B. As shown in Figures 7b, 7c, the thermocouples A are disposed in 2 rows in the longitudinal direction of the specimen S, specifically, in the row: 1A, 3A, 5A and in the row: 2A, 4A, 6A, the distance $l_5$ relative to the lateral direction of the specimen S between 1A and 2A, 3A and 4A, and 5A and 6A is 720 mm, the distance $l_6$ relative to the longitudinal direction of the specimen S between 1A, 2A and 3A, 4A, and 3A, 4A and 5A, 6A is 690 mm and the distance $l_7$ between 1A - 6A and the bottom of the lower layer of the specimen 8 is 305 mm.

Further as shown in Figure 7a, the thermocouples B are disposed in 3 rows along the longitudinal direction of the specimen S, specifically, in a row 2B and 4B on one side of the specimen S, in a row of 5B, 6B, 7B, 8B and 9B at the centre of the specimen S and in a row of 1B and 3B on the other side of the specimen S, in which the distance $l_8$ in the lateral direction of the specimen S between the row 2B, 4B and the row 5B - 9B is 540 mm, the distance $l_8$ in the lateral direction of the specimen S between the row 1B, 3B and the row 5B through 9B is 540 mm, while the longitudinal distance $l_9$ between 5B and 6B, 8B and 9B is 700 mm, the longitudinal distance $l_{10}$ between 6B and 8B is 680 mm and the longitudinal distance $l_{11}$ between 1B (2B) and 7B, and 7B and 3B (4B) is 690 mm respectively.

According to theory, the average value for the temperature rise at each of the points should not exceed 139°C (250°F), and the time required for causing such a temperature rise forms the reference for the judgement.

According to the experiment, an average temperature of to 5.4 + 139 = 144.4°C is allowable in the case of a temperature rise of 139°C from an initial average temperature of 5.4°C at each of the points on the floor.

Figure 8 shows the mode of temperature change. About 45 minutes are required after ignition for the average temperature from each of the measuring points 1B - 9B to reach 144.4°C. The average temperature rise at each of the points after the elapse of 45 minutes is 135.8°C. Further, the cotton pieces were not ignited, and the structure was not damaged or destroyed under the applied load.

This means that the floor structure according to this invention can satisfy the standards of ASTM E-119 at least for 45 minutes after the occurrence of fire, showing that no fire occurs within the chamber, no high temperature as disclosed in the aforementioned literature is attained and sufficient time can be provided for the escape of passengers.

According to this invention, since the upper layer includes a sheet containing a material which is thermally decomposable to release water, the lower layer is constituted by a flame-retardant plate, the middle layer is constituted by a flame-retardant and strength-imparting member, and a heat insulating material is disposed between the lower layer and the middle layer, a remarkably advantageous effect of providing excellent flame-retardant and heat-resistant floor structure as compared with the known floor structure can be provided.

Further, since a T-shaped or other rebated groove is provided in the mounting portion and/or in the connection member disposed on the middle layer and only the grooved portion is exposed to the outside, advantageous effects such as facilitating the mounting of equipment or the likes below the floor structure without degrading the fire-resistant and heat-resistant properties that cannot be obtained so far in the prior art, can be realized.

## Claims

1. A floor structure comprising an upper layer, a middle layer for providing structural strength, a lower layer covering the lower surface of the middle layer, and a layer of heat insulating material disposed between the lower layer and the middle layer, said middle layer and the lower layer being made of flame-retardant material, characterized in that said upper layer (1) contains a material which is thermally decomposable to release water, and in that said middle layer (2) is provided with a plurality of partitioned spaces and adapted to support a load through the upper layer from below over the entire area thereof.

2. A floor structure according to claim 1, characterized in that said thermally decomposable material includes a hydroxide.

3. A floor structure according to claim 2, characterized in that said upper layer is composed of a surface sub-layer (11) having a high abrasion resistance and a cushioning effect, a middle sub-layer (12) having a low heat conductivity and a bottom sub-layer (13) containing said hydroxide therein.

4. A floor structure according to any one of claims 1, 2, and 3, characterised in that said middle layer (2) is provided with mounting means (5, 6) extending downwardly therefrom, said lower layer (3) being attached to said mounting means.

5. A floor structure according to claim 5, wherein T-shaped grooves (51) are formed in said respective mounting means (5, 6).

**Patentansprüche**

1. Deckenbauweise, bestehend aus einer Oberschicht, einer Mittelschicht zum Vorsehen von Konstruktionsfestigkeit, einer Unterschicht, die die Unterfläche der Mittelschicht bedeckt, und einer Schicht wärmeisolierten Materials, die zwischen der Unterschicht und der Mittelschicht angeordnet ist, wobei die Mittelschicht und die Unterschicht aus einem flammenhemmenden Material besteht, dadurch gekennzeichnet, daß die Oberschicht (1) ein Material enthält, das thermisch zersetzbar ist, um Wasser freizusetzen, und daß die Mittelschicht (2) mit einer Mehrzahl von abgeteilten Räumen versehen ist und eine Last durch die Oberschicht von unten über ihre gesamte Fläche tragen kann.

2. Deckenbauweise nach Anspruch 1, dadurch gekennzeichnet, daß das thermisch zersetzbare Material ein Hydroxid enthält.

3. Deckenbauweise nach Anspruch 2, dadurch gekennzeichnet, daß die Oberschicht aus einer Oberflächenhilfsschicht (11) mit einem hohen Verschleißwiderstand und einer Dämpfwirkung, einer Mittelhilfsschicht (12) mit einer niedrigen Wärmeleitfähigkeit und einer Grundhilfsschicht (13), die das Hydroxid enthält, zusammengesetzt ist.

4. Deckenbauweise nach irgendeinem der Ansprüche 1, 2 und 3, dadurch gekennzeichnet, daß die Mittelschicht (2) mit Befestigungsmitteln (5, 6) versehen ist, die sich von ihr aus nach unten erstrecken, wobei die Unterschicht (3) mit den Befestigungsmitteln verbunden ist.

5. Deckenbauweise nach Anspruch 4, dadurch gekennzeichnet, daß T-förmige Nuten (51) in den jeweiligen Befestigungsmitteln (5, 6) ausgebildet sind.

**Revendications**

1. Une structure de plancher comprenant une couche supérieure, une couche médiane servant à procurer une résistance structurelle, une couche inférieure couvrant la surface inférieure de la couche médiane, et une couche de matériau isolant déposée entre la couche inférieure et la couche médiane, lesdites couche médiane et couche inférieure étant constituées d'un matériau retardateur de flamme, caractérisé en ce que ladite couche supérieure (1) contient un matériau qui est thermiquement décomposable pour dégager de l'eau et en ce que ladite couche médiane (2) est pourvue d'une pluralité d'espaces répartis et adaptés pour supporter une charge venant de la couche supérieure et répartie sur la totalité de sa surface.

2. Une structure de plancher selon la revendication 1, caractérisée en ce que ledit matériau thermiquement décomposable comprend un hydroxyde.

3. Une structure de plancher selon la revendication 2, caractérisée en ce que ladite couche supérieure est composée d'une sous-couche de surface (11) présentant une résistance à l'abrasion élevée et un effet de rembourrage, une sous-couche médiane (12) présentant un faible conductivité thermique et une sous-couche de fond (13) contenant en son sein ledit hydroxyde.

4. Une structure de plancher selon l'une des revendications 1, 2 et 3, caractérisée en ce que ladite couche médiane (2) est pourvue de moyens de montage (5, 6) s'étendant en allant vers le bas, ladite couche inférieure (3) étant fixée auxdits moyens de montage.

5. Une structure de plancher selon la revendication 4, dans laquelle des gorges en forme de T (51) sont formées dans lesdits moyens de montages (5, 6) respectifs.

FIG. 1

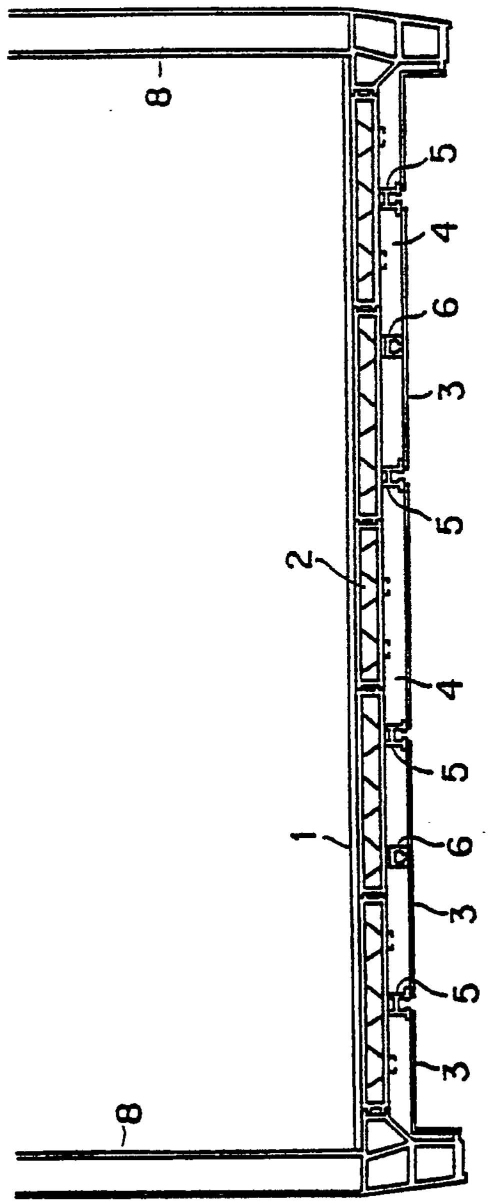

FIG. 2

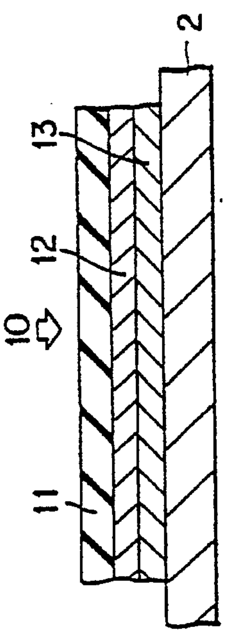
2
13
12
10
11

FIG. 3

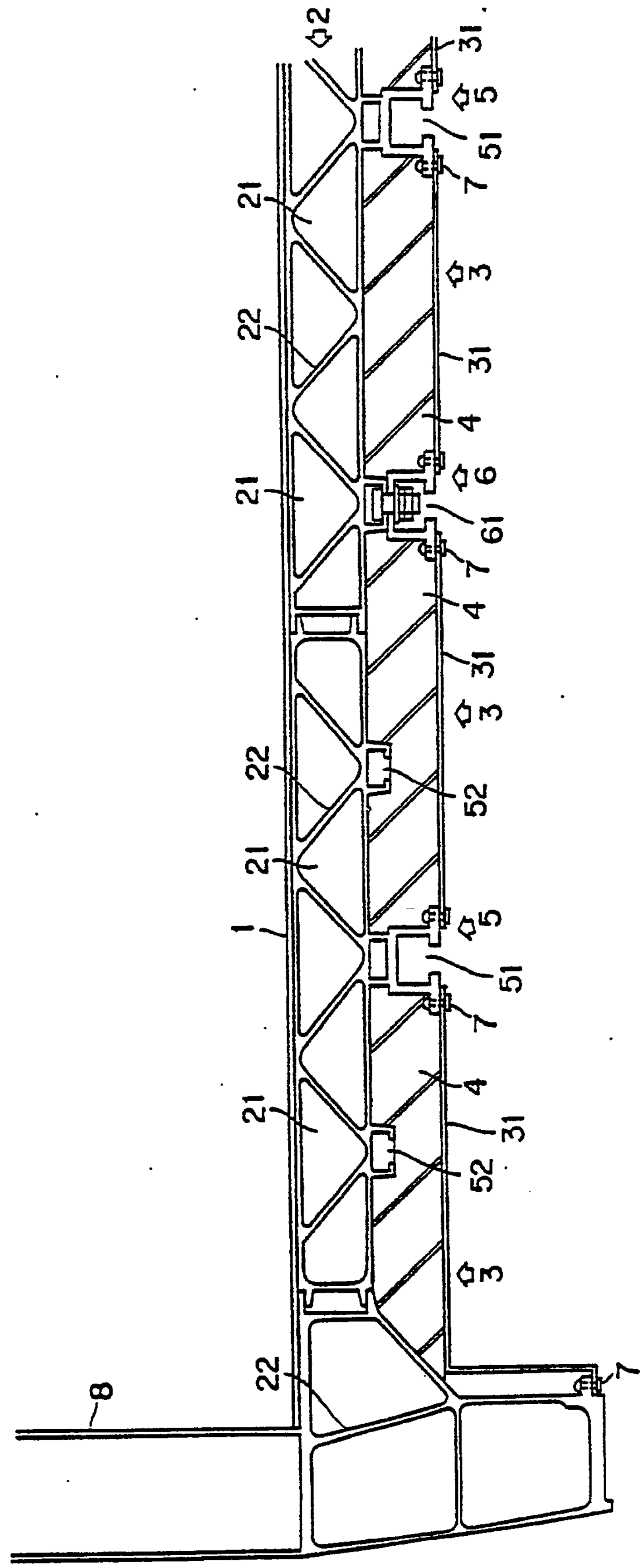
12
31
5
51
7
21
3
22
31
4
6
61
7
4
31
3
22
52
21
5
1
51
7
4
21
31
52
3
22
7
8

FIG. 4

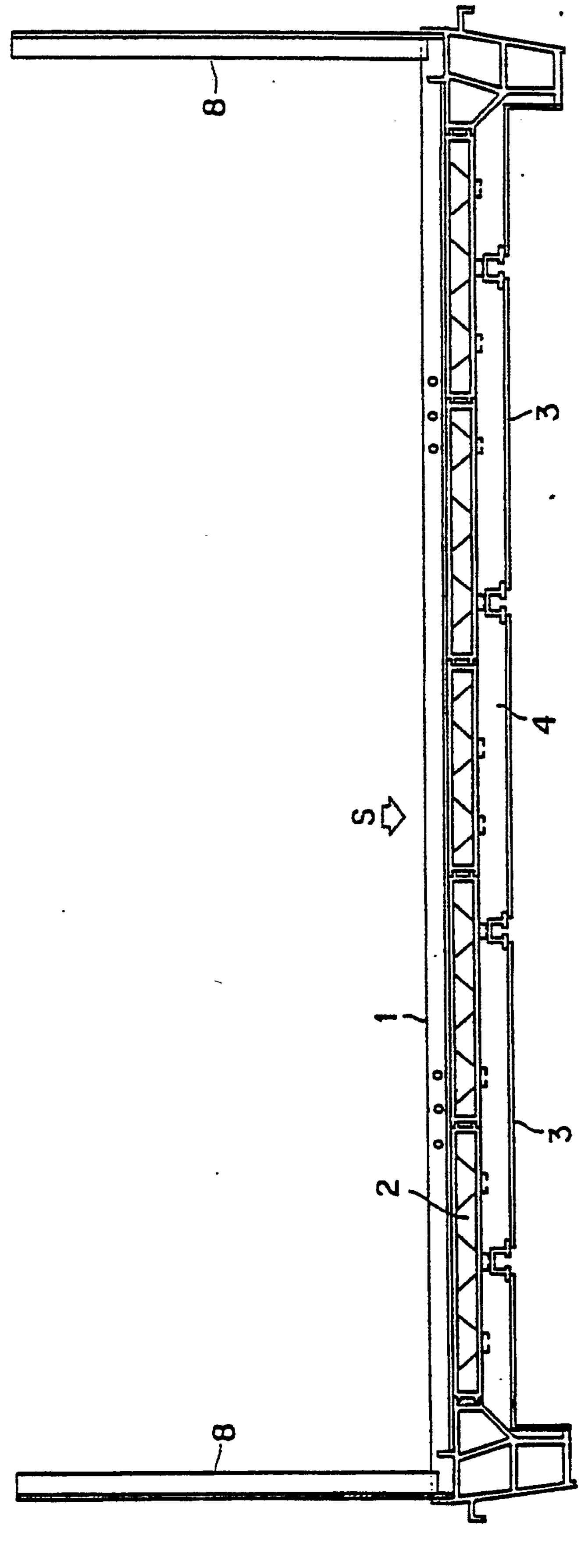

FIG. 5a

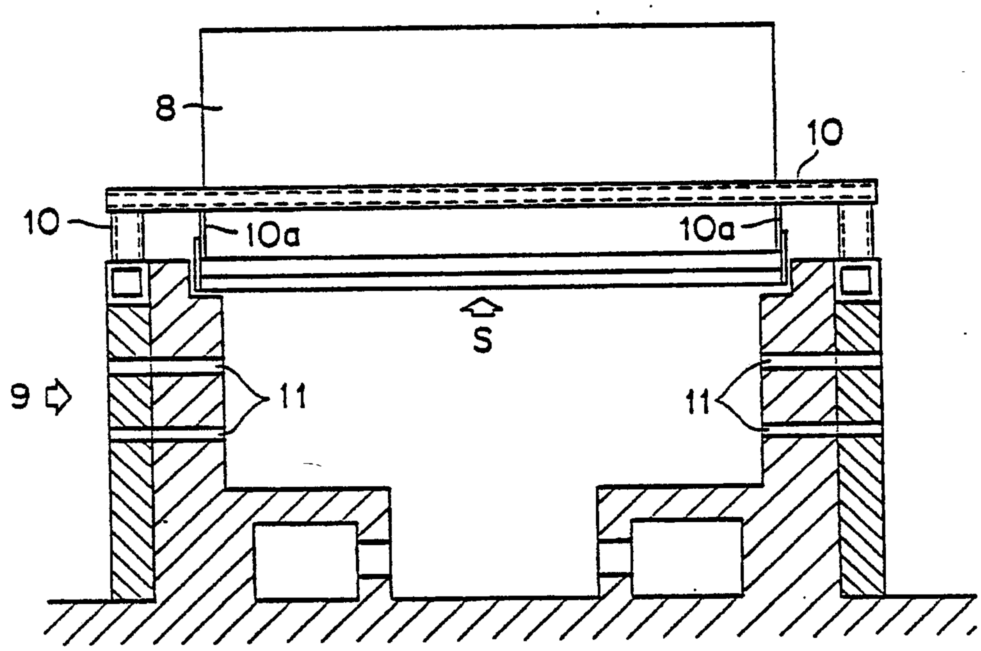

FIG. 5b

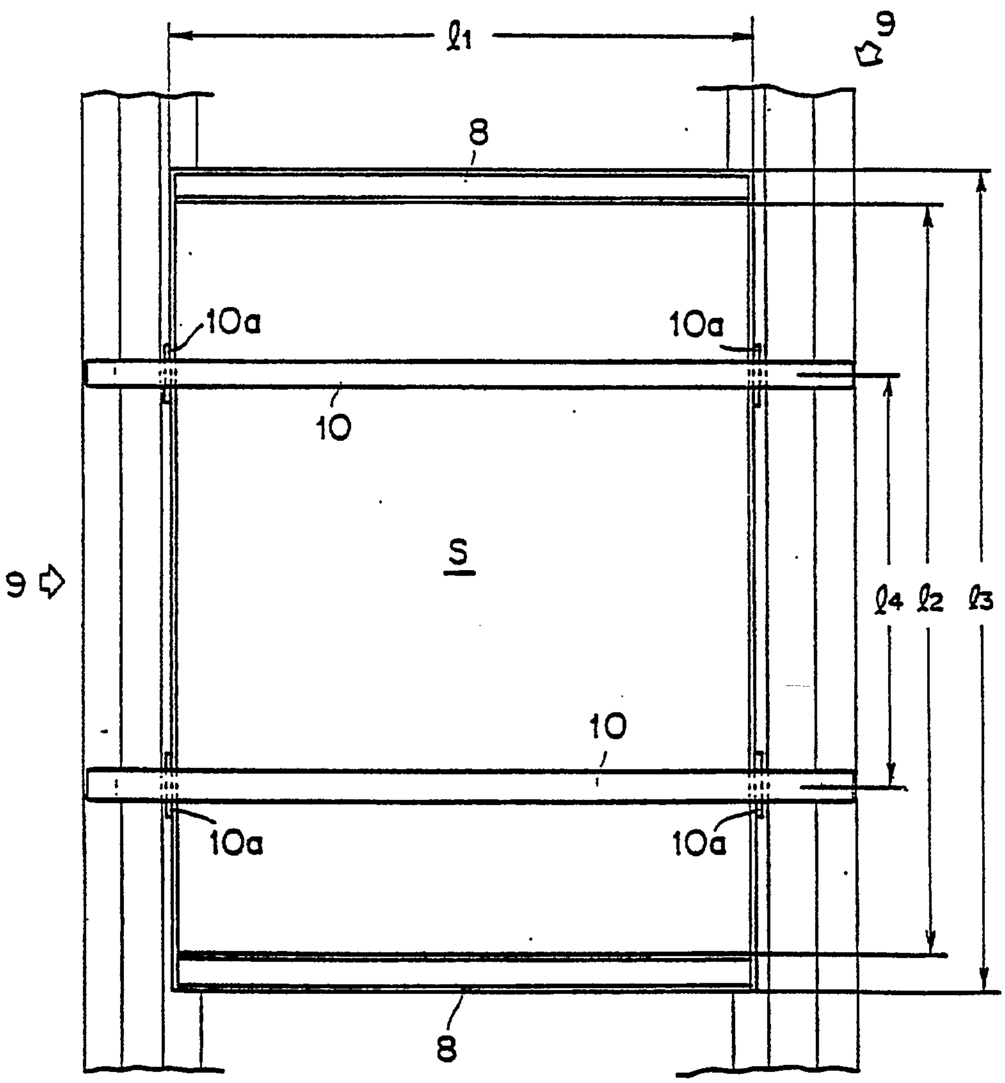

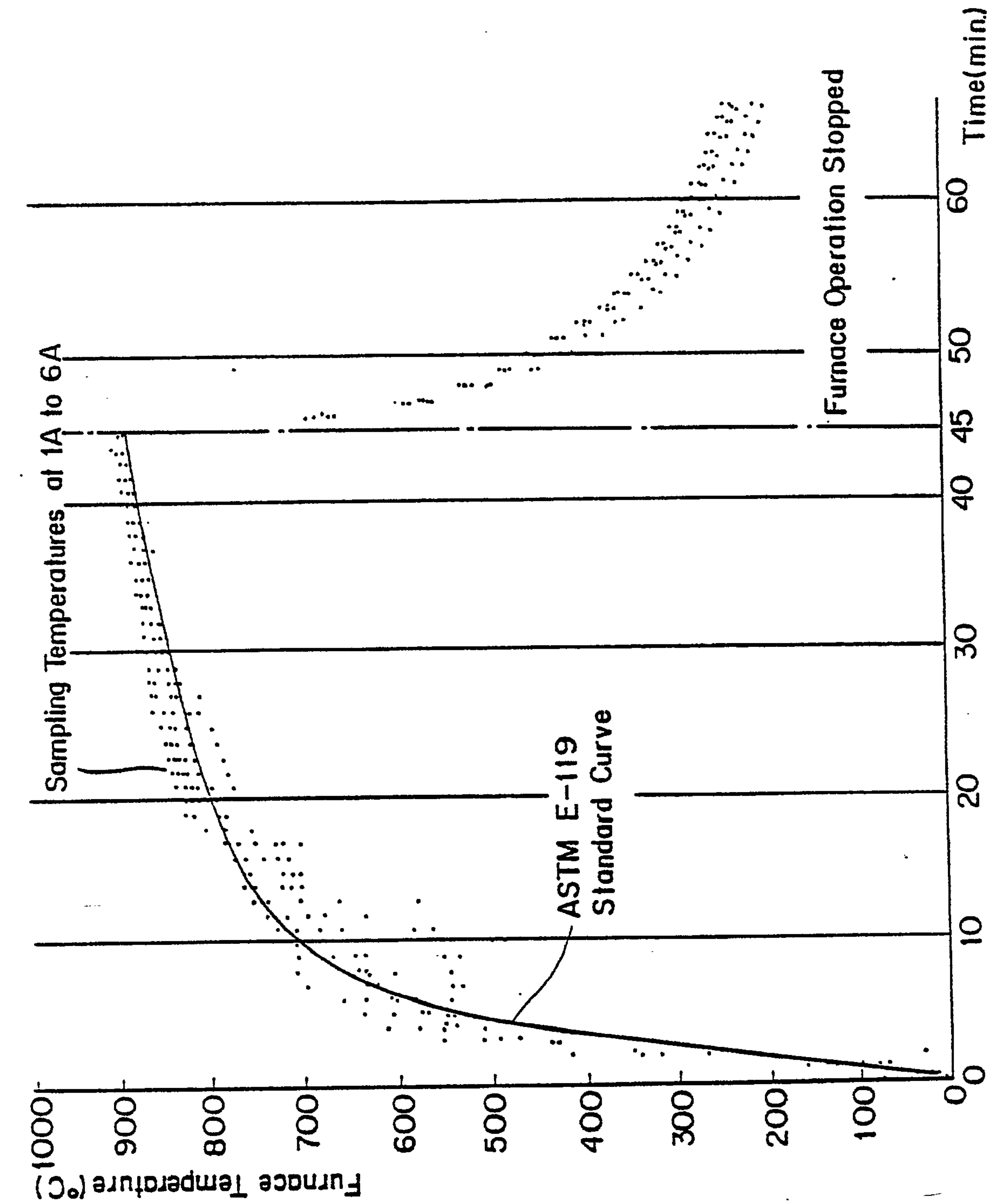

Furnace Temperature (°C)
1000
900
800
700
600
500
400
300
200
100
0
0
10
20
30
40
45
50
60
Time(min.)
Sampling Temperatures at 1A to 6A
ASTM E-119
Standard Curve
Furnace Operation Stopped


FIG. 6

FIG. 7a

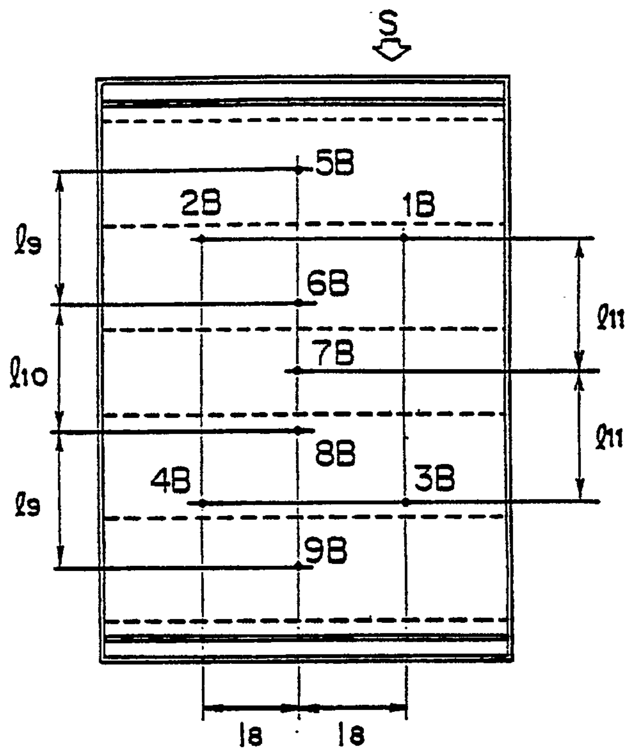
S
5B
2B
1B
6B
7B
8B
4B
3B
9B
ℓ9
ℓ10
ℓ9
ℓ11
ℓ11
l8
l8

FIG. 7b

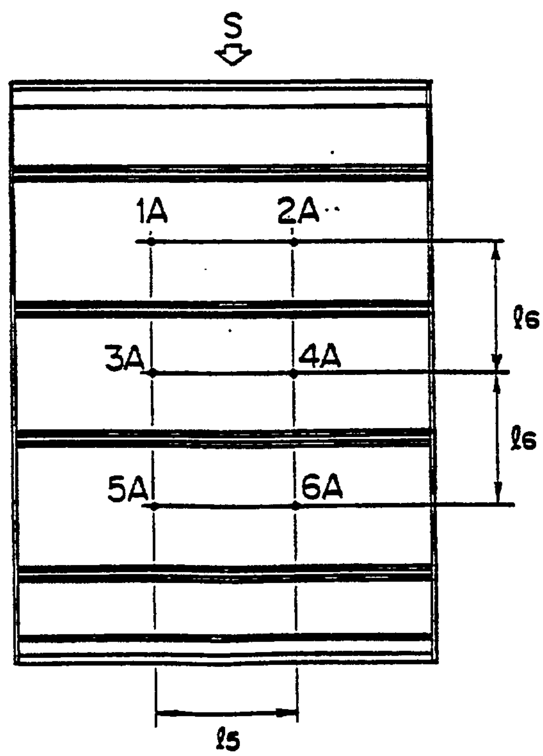
S
1A
2A
3A
4A
5A
6A
ℓ6
ℓ6
ℓ5

FIG. 7c

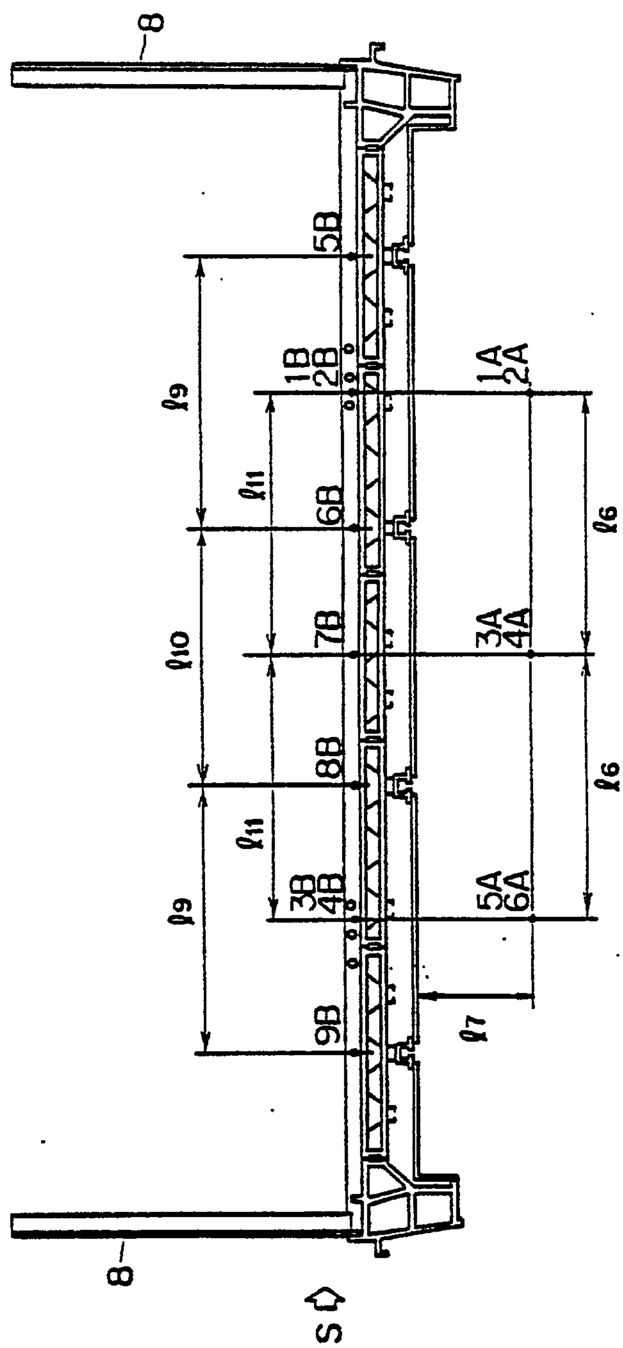
8
5B
1B
2B
1A
2A
ℓ9
ℓ11
6B
ℓ6
ℓ10
7B
3A
4A
8B
ℓ6
ℓ11
3B
4B
5A
6A
ℓ9
ℓ7
9B
8
S

FIG. 8

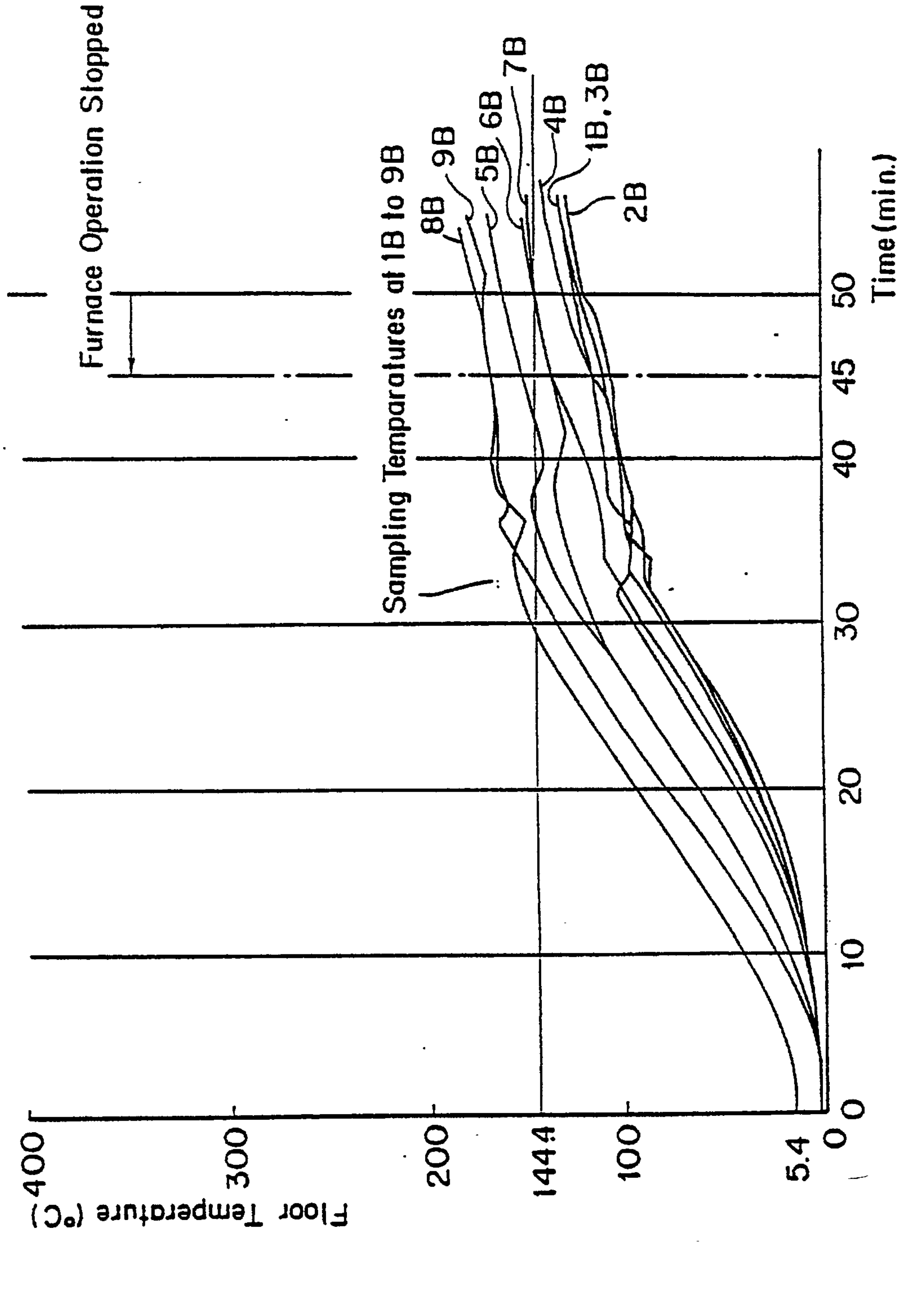
Furnace Operation Stopped
Sampling Temparatures at 1B to 9B
8B
9B
5B
6B
7B
4B
1B, 3B
2B
Time (min.)
0
10
20
30
40
45
50
Floor Temperature (°C)
400
300
200
144.4
100
5.4
0